# EUROPÄISCHE PATENTSCHRIFT

(11) **EP 4 114 720 B1**
(45) Veröffentlichungstag und Bekanntmachung des Hinweises auf die Patenterteilung: **13.11.2024**
(21) Anmeldenummer: 21706242.1
(22) Anmeldetag: 16.02.2021
(51) Int. Cl.: B62M 6/60, B62M 6/50

(54) **VERFAHREN ZUR STEUERUNG EINES ELEKTROMOTORS FÜR EINEN SCHIEBEHILFE-BETRIEBSMODUS, STEUERGERÄT UND ZWEIRAD**
METHOD FOR CONTROLLING AN ELECTRIC MOTOR FOR A PUSHING AID OPERATING MODE, CONTROL DEVICE AND BICYCLE
PROCÉDÉ DE COMMANDE D'UN MOTEUR ÉLECTRIQUE POUR UN MODE DE FONCTIONNEMENT D'AIDE À LA POUSSÉE, DISPOSITIF DE COMMANDE ET BICYCLETTE

(30) Priorität: 02.03.2020 DE 102020202621; 03.02.2021 DE 102021200971
(43) Veröffentlichungstag der Anmeldung: 11.01.2023
(60) Teilanmeldung: 24187575.6
(73) Patentinhaber: Robert Bosch GmbH, 70442 Stuttgart (DE)
(72) Erfinder: BAUMGAERTNER, Daniel, 72072 Tuebingen (DE)
(86) Internationale Anmeldenummer: PCT/EP2021/053771
(87) Internationale Veröffentlichungsnummer: WO 2021/175582

(56) Entgegenhaltungen:
- EP-A1- 3 599 153
- EP-A1- 3 604 104
- DE-A1- 102018 212 453
- DE-B3- 102016 218 374
- DE-B3- 102018 212 636
- US-A1- 2018 086 417

## Beschreibung

Die Erfindung betrifft ein Verfahren zur Steuerung eines Elektromotors als Antriebsmotor eines Zweirads für einen Schiebehilfe-Betriebsmodus. Des Weiteren betrifft die Erfindung ein Steuergerät, welches dazu eingerichtet ist, das erfindungsgemäße Verfahren durchzuführen, und ein Zweirad mit diesem Steuergerät.

Stand der Technik DE 10 2016 218374 offenbart ein Verfahren zur Steuerung eines Elektromotors als Antriebsmotor eines Zweirads, aufweisend die folgenden Verfahrensschritte· sensorbasierte Erkennung eines Schiebens des Zweirads,· Erfassung einer Eingabe eines Nutzers zur Aktivierung eines Schiebehilfe-Betriebsmodus, wobei die Erfassung der Eingabe des Nutzers vor der sensorbasierten Erkennung erfolgt, und· Erzeugung eines Motordrehmoments zum Antrieb des Zweirads im Schiebehilfe-Betriebsmodus in Abhängigkeit des erkannten Schiebens und der erfassten Eingabe des Nutzers.

Zweirädermit einem Elektromotor als Antriebsmotor sind bekannt, insbesondere Elektrofahrräder. Die Steuerung des Elektromotors erfolgt im Normalbetrieb vorzugsweise in Abhängigkeit einer erfassten Trittkraft eines Radfahrers auf die Pedale des Zweirads beziehungsweise Elektrofahrrads, beispielsweise wird dazu ein Fahrerdrehmoment sensorisch erfasst. Des Weiteren ist für ein Schieben des Zweirads ein Schiebehilfe-Betriebsmodus zur Kraftunterstützung des Radfahrers beim Schieben des Zweirads bekannt. Der Schiebehilfe-Betriebsmodus, auch verkürzt einfach Schiebehilfe genannt, ist mittlerweile eine wichtige Funktion der meist relativ schweren Zweiräder, da das Schieben schwierig sein kann, insbesondere an Steigungen der Fahrtstrecke. Im Schiebehilfe-Betriebsmodus wird der Radfahrer während des Gehens neben dem Fahrrad beim Schieben des Zweirads bis zu einer relativ geringen Geschwindigkeit motorisch unterstützt. Mit anderen Worten bringt der Radfahrer während der Kraftunterstützung durch das erzeugte Motordrehmoment im Schiebehilfe-Betriebsmodus keine Trittkraft auf die Pedale auf. Durch eine zweistufige Freigabe des Schiebehilfe-Betriebsmodus, beispielsweise durch das Drücken zweier Tasten, kann typischerweise vermieden werden, dass der Schiebehilfe-Betriebsmodus ungewollt aktiviert wird. Beispielsweise durch Fehlbedienung an einer abschüssigen Treppe oder während einer Reparatur. Das zweimalige Erfassen einer Eingabe zur Aktivierung des Schiebehilfe-Betriebsmodus jedoch nicht besonders intuitiv, so dass manche Nutzer nicht wissen, wie sie den Schiebehilfe-Betriebsmodus aktivieren können.

Die Schrift DE 10 2016 218 374 B3 offenbart ein Steuerungsverfahren zur Erzeugung eines Drehmoments durch einen Elektromotor zum Antrieb eines Elektrofahrrads bei aktivierter Schiebehilfe.

Das Dokument DE 10 2016 209 570 B3 offenbart ein Steuerungsverfahren zu einer Schiebehilfe eines Elektrofahrrads.

In der Schrift DE 10 2016 209 560 B3 ist ein Steuerungsverfahren zur Regelung eines Elektromotors für die Schiebehilfe eines Elektrofahrrads beschrieben. Das Steuerungsverfahren regelt den Elektromotor in Abhängigkeit eines erfassten Nickwinkels des Elektrofahrrads um dessen Querachse.

Die Aufgabe der vorliegenden Erfindung ist es, eine Aktivierung des Schiebehilfe-Betriebsmodus für einen Radfahrer beziehungsweise Nutzer zu vereinfachen.

### Offenbarung der Erfindung

Die vorstehende Aufgabe wird erfindungsgemäß entsprechend der unabhängigen Ansprüche 1, 12 und 13 gelöst.

Die vorliegende Erfindung betrifft ein Verfahren zur Steuerung eines Elektromotors als Antriebsmotor eines Zweirads. Das Zweirad ist insbesondere ein Elektrofahrrad. Das Steuerungsverfahren weist als Verfahrensschritte eine sensorbasierte Erkennung eines Schiebens des Zweirads beziehungsweise eine Erkennung eines Schiebens des Zweirads durch einen Nutzer mittels eines Sensors beziehungsweise einer Sensoreinheit auf, welcher bzw. welche bevorzugt einen Beschleunigungssensor aufweist. Mit anderen Worten wird vorteilhafterweise erkannt, wenn der Nutzer das Zweirad beim Gehen schiebt. Optional wird zusätzlich eine Schieberichtung des Schiebens des Zweirads durch den Nutzer erkannt. Die Erkennung des Schiebens erfolgt sensorbasiert, wodurch eine automatische Erkennung des Schiebens resultiert. In einem weiteren Schritt des Verfahrens wird eine Eingabe des Nutzers zur Aktivierung eines Schiebehilfe-Betriebsmodus erfasst, insbesondere mittels eines Eingabemittels, beispielsweise mittels eines Schalters, Tasters, Touchscreens oder Druckknopfes. Die Eingabe wird insbesondere nur bei kontinuierlicher Eingabe beziehungsweise kontinuierlicher Betätigung mittels des Eingabemittels erfasst. Eine kontinuierliche Eingabe am beziehungsweise Betätigung des Eingabemittels wird beispielsweise erkannt beziehungsweise erfasst, sobald die Eingabe größer oder gleich einer vorgegebenen Zeitdauer andauert, beispielsweise beträgt diese vorgegebenen Zeitdauer zwischen 1 bis 10 Sekunden. Die Erfassung der Eingabe des Nutzers erfolgt in Abhängigkeit des erkannten Schiebens beziehungsweise während des Schiebens. Mit anderen Worten wird in dieser Ausgestaltung durch das erkannte Schieben des Zweirads die Erfassung der Eingabe des Nutzers zur Aktivierung des Schiebehilfe-Betriebsmodus freigegeben beziehungsweise ermöglicht wird. In einer nicht beanspruchten Ausgestaltung, erfolgt die Erkennung des Schiebens vorteilhafterweise nach der Erfassung der Eingabe des Nutzers, wobei die Erkennung des Schiebens vorteilhafterweise in Abhängigkeit der erfassten Eingabe durchgeführt wird. Mit anderen Worten wird in dieser nicht beanspruchten Ausgestaltung durch die erfasste Eingabe des Nutzers die Erkennung des Schiebens freigegeben beziehungsweise ermöglicht. Danach wird ein Motordrehmoment zum Antrieb des Zweirads in Abhängigkeit der erfassten Eingabe zur Aktivierung des Schiebehilfe-Betriebsmodus und in Abhängigkeit des erkannten Schiebens erzeugt. Mit anderen Worten wird vorteilhafterweise durch die erfasste Eingabe zur Aktivierung des Schiebehilfe-Betriebsmodus durch den Nutzer während eines sensorisch erfassten Schiebens ein Motordrehmoment zur Schiebehilfe erzeugt bzw. die Schiebehilfe aktiviert. Das erzeugte Motordrehmoment kann vorteilhafterweise in Abhängigkeit einer erkannten Schieberichtung des Schiebens dazu eingerichtet sein, das Zweirad in Fahrtrichtung vorwärts oder rückwärts anzutreiben. Ferner wird das Motordrehmoment vorteilhafterweise in Abhängigkeit des erkannten Schiebens erzeugt. Dadurch wird beispielsweise die Erzeugung des Motordrehmoments aktiviert, wenn vorher eine Eingabe des Nutzers erfasst wurde. Dadurch wird beispielsweise zusätzlich oder alternativ die Erzeugung des Motordrehmoments abgebrochen, falls kein Schieben des Zweirads mehr erkannt beziehungsweise das Zweirad vom Fahrer aktiv gebremst wird, und/oder optional eine Geschwindigkeit des Zweirads in Abhängigkeit einer erfassten Schiebegeschwindigkeit des erkannten Schiebens angepasst. Durch das Verfahren resultiert der Vorteil, dass eine einzige erfasste Eingabe des Radfahrers beziehungsweise Nutzers zur Aktivierung des Schiebehilfe-Betriebsmodus ausreicht, um die Schiebehilfe zu aktivieren beziehungsweise ein das Schieben unterstützendes Motordrehmoment zu erzeugen, wobei die Schiebehilfe nicht versehentlich aktiviert werden kann. Vorteilhafterweise kann zusätzlich eine Deaktivierung des Schiebehilfe-Betriebsmodus einfach erreicht werden, beispielsweise wird die Eingabe des Nutzers nur bei kontinuierlicher Betätigung des Eingabemittels erfasst. Das Steuerungsverfahren ermöglicht dadurch eine leichte und intuitive Bedienbarkeit, wobei eine fehlerhafte Aktivierung des Schiebehilfe-Betriebsmodus wegen der automatisierten Erkennung des Schiebens des Zweirads durch den Nutzer beziehungsweise Radfahrers als notwendige Bedingung für die Erzeugung des Motordrehmoments beziehungsweise die Aktivierung des Schiebehilfe-Betriebsmodus nahezu ausgeschlossen ist. Mit anderen Worten repräsentiert das Steuerungsverfahren vorteilhafterweise eine zweistufige Aktivierung eines Schiebehilfe-Betriebsmodus zur Erzeugung des Motordrehmoments durch die Erkennung des Schiebens als eine Stufe und die Erfassung der Eingabe des Nutzers als eine andere Stufe. Insbesondere ist es vorgesehen den Schiebehilfe-Betriebsmodus zur Erzeugung des Motordrehmoments durch die Erfassung der Eingabe des Nutzers und die anschließende Erkennung des Schiebens zu aktivieren, wodurch das Motordrehmoment zum Antrieb des Zweirads beziehungsweise Elektrofahrrads erzeugt wird, wobei insbesondere eine kontinuierliche Erfassung der Eingabe des Nutzers zur Erzeugung des Motordrehmoments erforderlich ist. Alternativ ist es vorgesehen den Schiebehilfe-Betriebsmodus zur Erzeugung des Motordrehmoments durch die Erkennung des Schiebens und die anschließende oder zeitgleiche Erfassung der Eingabe des Nutzers zu aktivieren, wodurch das Motordrehmoment zum Antrieb des Zweirads beziehungsweise Elektrofahrrads erzeugt wird, wobei insbesondere eine kontinuierliche Erfassung der Eingabe des Nutzers zur Erzeugung des Motordrehmoments erforderlich ist. Besonders bevorzugt wird die Erkennung des Schiebens mittels einer Sensoreinheit sowie mittels eines Steuergeräts einer Antriebseinheit des Zweirads und die Erfassung der Eingabe des Nutzers mittels des Eingabemittels beziehungsweise Tasters an einer Kontrollvorrichtung an einem Lenker des Zweirads und/oder mittels einer Anzeigevorrichtung an einem Lenker des Zweirads durchgeführt, wodurch der Vorteil resultiert, dass selbst bei einer Fehlfunktion einer dieser Komponenten des Zweirads kein Motordrehmoment zum Schiebehilfe-Betriebsmodus erzeugt wird. Dadurch wird vorteilhafterweise die Sicherheit des Nutzers des Zweirads erhöht.

In einer bevorzugten Ausgestaltung wird dem Nutzer eine Information zu einer Freigabe der Erfassung der Eingabe zur Aktivierung des Schiebehilfe-Betriebsmodus in Abhängigkeit des erkannten Schiebens beziehungsweise während des Schiebens angezeigt. Mit anderen Worten wird dem Nutzer nach dem erkannten Schieben angezeigt, dass der Schiebehilfe-Betriebsmodus aktiviert werden kann, sobald beziehungsweise wenn eine Eingabe des Nutzers erkannt wird, wobei die Eingabe insbesondere kontinuierlich erfolgen muss. Die Anzeige der Information erfolgt vorteilhafterweise mittels eines Displays einer Anzeigevorrichtung, beispielsweise angeordnet am Lenker des Zweirads, insbesondere mittels eines Human-Maschine Interface (HMI). Alternativ oder zusätzlich kann die Anzeige der Information mittels Leuchten erfolgen, welche beispielsweise am oder im Lenker und/oder am oder im Rahmen des Zweirads und/oder an oder in einem Taster zur Aktivierung der Schiebehilfe angeordnet sind, die Leuchten umfassen insbesondere Leuchtdioden. Alternativ oder zusätzlich kann die Anzeige der Information durch ein akustisches Signal und/oder mittels wenigstens eines Aktors erfolgen, wobei der Aktor dazu eingerichtet ist, ein haptisches Signal beziehungsweise eine Vibration des Lenkers und/oder des Rahmens des Zweirads zu erzeugen. Durch diese Ausgestaltung wird der Nutzer informiert und eine Bedienung beziehungsweise Aktivierung des Schiebehilfe-Betriebsmodus erfolgt intuitiv.

In einer anderen besonders bevorzugten Ausgestaltung wird dem Nutzer eine Information zur Freigabe der Erkennung des Schiebens des Zweirads in Abhängigkeit der erfassten Eingabe des Nutzers zur Aktivierung des Schiebehilfe-Betriebsmodus angezeigt, wobei dem Nutzer insbesondere angezeigt wird, dass nach der erfassten Eingabe des Nutzers durch eine anschließende sensorbasierte Erkennung des Schiebens des Zweirads das Motordrehmoment erzeugt beziehungsweise der Schiebehilfe-Betriebsmodus durch die sensorbasierte Erkennung des Schiebens aktiviert wird. Mit anderen Worten wird dem Nutzer nach der erfassten Eingabe angezeigt, dass der Schiebehilfe-Betriebsmodus aktiviert wird, sobald beziehungsweise wenn ein Schieben des Zweirads erkannt wird, wobei die erfasste Eingabe insbesondere kontinuierlich erfolgen muss. Die Anzeige der Information erfolgt vorteilhafterweise mittels des Displays der Anzeigevorrichtung, beispielsweise angeordnet am Lenker des Zweirads, insbesondere mittels eines Human-Maschine Interface (HMI). Alternativ oder zusätzlich kann die Anzeige der Information mittels Leuchten erfolgen, welche beispielsweise am oder im Lenker und/oder am oder im Rahmen des Zweirads und/oder an oder in einem Taster zur Aktivierung der Schiebehilfe angeordnet sind, die Leuchten umfassen insbesondere Leuchtdioden. Alternativ oder zusätzlich kann die Anzeige der Information durch ein akustisches Signal und/oder mittels wenigstens eines Aktors erfolgen, wobei der Aktor dazu eingerichtet ist, ein haptisches Signal beziehungsweise eine Vibration des Lenkers und/oder des Rahmens des Zweirads zu erzeugen. Durch diese Ausgestaltung wird der Nutzer ebenfalls informiert und eine Bedienung beziehungsweise Aktivierung des Schiebehilfe-Betriebsmodus erfolgt intuitiv.

In einer bevorzugten Ausführung der Erfindung wird in einem Schritt vor der Erkennung des Schiebens eine Geschwindigkeit des Zweirads erfasst. Anschließend erfolgt die Erkennung des Schiebens in Abhängigkeit der erfassten Geschwindigkeit, insbesondere wird ein Schieben nur bei einer erfassten Geschwindigkeit kleiner oder gleich einer Maximalgeschwindigkeit von beispielsweise 6 km/h erkannt. Durch diese Ausführung wird eine fehlerhafte Aktivierung des Schiebehilfe-Betriebsmodus während einer Fahrt mit dem Zweirad im Normalbetrieb für die meisten Fahrtzustände vermieden.

In einer bevorzugten Ausgestaltung der Erfindung erfolgt eine Erfassung einer Beschleunigung des Zweirads in Richtung einer Längsachse des Zweirads und/oder in Richtung einer Querachse des Zweirads. Anschließend wird das Schieben in Abhängigkeit der erfassten Beschleunigung des Zweirads erkannt. Optional wird zusätzlich die Schieberichtung in Abhängigkeit der erfassten Beschleunigung des Zweirads erkannt. Durch diese Ausgestaltung resultiert der Vorteil, dass eine Bewegung des Zweirads schon im Stand oder bei sehr geringen Beschleunigungen und/oder Geschwindigkeiten erkannt werden kann. Die Erkennung des Schiebens in Abhängigkeit der erfassten Beschleunigung wird bevorzugt bei Überschreitung eines Schwellenwertes, insbesondere nach Filterung eines Signals einer Sensoreinheit, welches die Beschleunigung repräsentiert, und/oder durch ein maschinelles trainiertes Erkennungsverfahren beziehungsweise eine künstliche Intelligenz beziehungsweise ein angelerntes neuronales Netz durchgeführt. Dadurch kann beispielsweise ein Beschleunigungsverlauf einer Fahrt des Zweirads bei niedrigen Geschwindigkeiten, beispielsweise an einer Steigung der Fahrtstrecke, von einem Beschleunigungsverlauf beim Schieben des Zweirads unterschieden werden, so dass ein Schieben automatisiert und zuverlässig erkannt wird.

In einer besonders bevorzugten Ausgestaltung erfolgt nach der Erfassung der Beschleunigung eine Ermittlung wenigstens einer statistischen Größe in Abhängigkeit der erfassten Beschleunigung in Richtung der Längsachse des Zweirads und/oder in Richtung der Querachse des Zweirads beziehungsweise eines Verlaufs der erfassten Beschleunigung. Als statistische Größe wird beispielsweise die Standardabweichung, eine Mittelung, eine Varianz oder eine Kovarianz zwischen zweit erfassten Beschleunigungsverläufen ermittelt. Die statistische Größe, beispielsweise die Standardabweichung, wird vorteilhafterweise für eine vorgegebene Zeitspanne ermittelt, beispielsweise beträgt die Zeitspanne 1 bis 10 Sekunden. Anschließend wird in dieser Ausgestaltung das Schieben zusätzlich in Abhängigkeit der wenigstens einen ermittelten statistische Größe, beispielsweise der Standardabweichung, und eines Schwellenwertes erkannt. Das Schieben wird insbesondere dann erkannt, wenn die ermittelte Standardabweichung während der vorgegebenen Zeitspanne den Schwellenwert überschreitet. Durch diese Ausgestaltung resultiert der Vorteil, dass schon kleine beziehungsweise geringe Bewegungen des Fahrrads als Schieben erkannt werden können.

Es kann in einer weiteren Ausführung vorgesehen sein, eine Erkennung eines Richtungswechsels der erfassten Beschleunigung in Richtung der Querachse innerhalb einer vorgegebenen Zeitspanne durchzuführen. Anschließend erfolgt in dieser Ausführung die Erkennung des Schiebens zusätzlich in Abhängigkeit des erkannten Richtungswechsels der erfassten Beschleunigung in Richtung der Querachse. Durch diese Ausführung resultiert der Vorteil, dass der Nutzer ein leicht zu merkendes und intuitives Bewegungsmuster zur Erkennung des Schiebens beziehungsweise eines Schiebewunsches durchführen kann.

In einer anderen Ausführung wird eine Drehung des Rotors des Elektromotors zu einer rückwärtsgerichteten Bewegung des Zweirads entlang der Längsachse des Zweirads erfasst. Anschließend erfolgt die Erkennung des Schiebens in Abhängigkeit der erfassten Rotordrehung. Insbesondere erfolgt dabei auch die Erkennung der Schieberichtung in Abhängigkeit der erfassten Rotordrehung. Dadurch resultiert der Vorteil, dass bei typischen Antriebsvorrichtungen, welche einen Motorfreilauf in vorwärts gerichteter Drehrichtung aufweisen, eine Bewegung des Zweirads sehr schnell erfasst und als Schieben erkannt beziehungsweise interpretiert werden kann.

Es kann ferner in einem Schritt vorgesehen sein, ein Kamerabild beziehungsweise eine Abfolge von Kamerabildern von zumindest einem Teil einer Umgebung des Zweirades zu erfassen. Die Kamera kann vorteilhafterweise an einer Komponente des Zweirads angeordnet sein, beispielsweise ist die Kamera an einem Lenker des Zweirads mit einer Blickrichtung in Fahrtrichtung beziehungsweise entlang der Längsachse des Zweirads nach vorne angeordnet. Anschließend wird eine Erkennung des Schiebens und/oder der Schieberichtung in Abhängigkeit des erfassten Kamerabildes beziehungsweise der Abfolge von Kamerabildern durchgeführt. Es kann beispielsweise vorgesehen sein, dass das Schieben basierend auf einer in Abhängigkeit des ermittelten optischen Flusses bestimmten Bewegung des Zweirads erkannt wird. Der optische Fluss kann in Abhängigkeit der Abfolge von Kamerabildern ermittelt werden. Durch diese Ausgestaltung der Erfindung kann vorteilhafterweise das Schieben des Zweirads durch den Nutzer relativ zuverlässig und schnell erkannt werden.

Darüber hinaus kann es in einer weiteren Ausgestaltung der Erfindung vorgesehen sein, eine Kraft des Nutzers beziehungsweise Radfahrers in Richtung der Längsachse des Zweirads auf einen Lenker des Zweirads zu erfassen. Das Schieben und/oder die Schieberichtung wird in dieser Ausgestaltung anschließend in Abhängigkeit der erfassten Kraft des Nutzers erkannt. Durch diese Ausgestaltung kann sehr zuverlässig ein gewünschtes Schieben des Zweirads und/oder eine Schieberichtung erkannt werden.

Zusätzlich kann in einem weiteren Schritt des Verfahrens eine Erfassung einer Trittgröße des Nutzers, insbesondere eine Erfassung einer Kadenz und/oder eine Erfassung eines Fahrerdrehmoments, durchgeführt werden. Anschließend erfolgt die Erkennung des Schiebens in Abhängigkeit der erfassten Trittgröße des Nutzers, wobei im Falle einer erfassten Trittgröße insbesondere kein Schieben erkannt wird. Durch diese Ausführung wird eine fehlerhafte Aktivierung der Schiebehilfe beziehungsweise des Schiebehilfe-Betriebsmodus zuverlässig vermieden.

Vorzugsweise erfolgt die Anzeige der Information zur möglichen Aktivierung des Schiebehilfe-Betriebsmodus durch eine Anpassung einer Beleuchtung einer Taste zur Eingabe des Nutzers zur Aktivierung des Schiebehilfe-Betriebsmodus. Vorteilhafterweise leuchtet oder blinkt die Taste bei einem erkannten Schieben farbig, insbesondere grün. Durch diese Ausgestaltung lässt sich der erkannte Schiebehilfewunsch leicht dem Nutzer beziehungsweise Radfahrer anzeigen.

Die Erfindung betrifft auch ein Steuergerät. Das Steuergerät ist so konfiguriert, dass es das erfindungsgemäße Verfahren ausführt. Mit anderen Worten ist das Steuergerät dazu eingerichtet, das erfindungsgemäße Verfahren durchzuführen.

Die Erfindung betrifft ferner ein Zweirad mit dem erfindungsgemäßen Steuergerät.

Weitere Vorteile ergeben sich aus der nachfolgenden Beschreibung von Ausführungsbeispielen mit Bezug zu den Figuren.
Figur 1: Elektrofahrrad als Zweirad
Figur 2: Ablaufdiagramm des Verfahrens als Blockschaltbild

### Ausführungsbeispiele

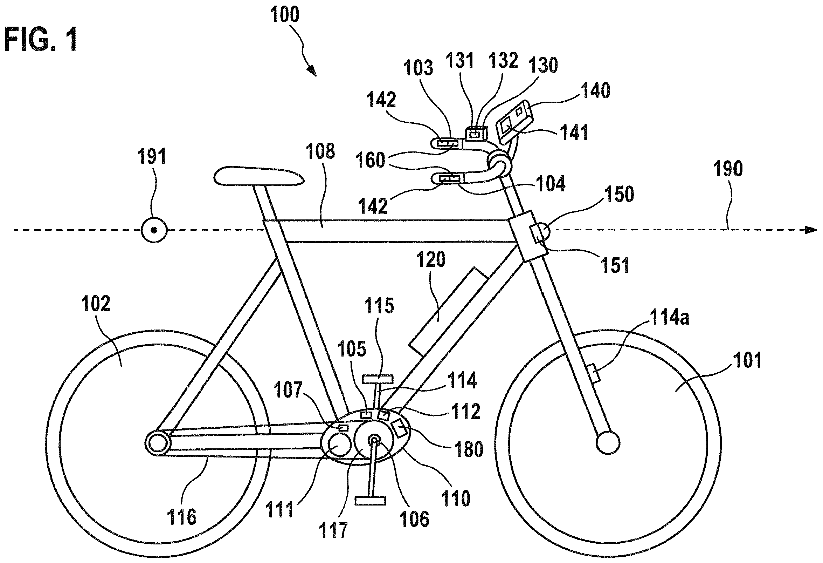

In Figur 1 ist ein Elektrofahrrad als Zweirad 100 schematisch dargestellt. Alternativ könnte das Zweirad 100 ein Motorrad sein, wobei das Motorrad mit einem Elektromotor 111 angetrieben wird. Das Elektrofahrrad beziehungsweise Zweirad 100 in Figur 1 weist ein Vorderrad 101 und ein Hinterrad 102 als Räder auf. Das Zweirad 100 in Figur 1 umfasst an einer Tretachse 106 beziehungsweise Kurbelwelle eine Antriebseinheit 110, welche einen Elektromotor 111 als Antriebsmotor aufweist. Die Antriebseinheit 110 weist ein Steuergerät 180 auf, wobei das Steuergerät 180 so konfiguriert ist, dass es den Elektromotor 111 zur Erzeugung eines Motordrehmoments zum Antrieb des Zweirads 100 beziehungsweise Elektrofahrrads ansteuert. Mit anderen Worten ist das Steuergerät 180 dazu eingerichtet, den Elektromotor 111 anzusteuern, wodurch ein Motordrehmoment zum Antrieb des Zweirads 100 erzeugt wird. Die Pedale 115 sind mittels Kurbeln 114 mit der Tretachse 106 beziehungsweise Kurbelwelle zur Erzeugung eines Fahrerdrehmoments durch den Fahrer verbunden. Das Fahrerdrehmoment kann als Trittgröße mittels eines Drehmomentsensors 105 im Bereich der Tretachse 106 erfasst werden. Alternativ kann als Trittgröße des Nutzers eine Trittfrequenz beziehungsweise eine Kadenz erfasst werden, beispielsweise mittels eines Drehzahlsensors an der Tretachse 106 und/oder an den Pedalen 115. Die Tretachse 106 beziehungsweise Kurbelwelle und der Elektromotor 111 sind mittels eines Getriebes mit einem Abtriebsritzel 117 verbunden. Das Abtriebsritzel 117 ist beispielsweise mittels eines Verbindungselements 116, beispielsweise einer Kette oder einem Riemen, mit einer Nabe des Hinterrades 102 als Antriebsrad zum Antrieb des Zweirads 100 verbunden. Es kann vorgesehen sein, wenigstens einen Drehzahlsensor 107 an beziehungsweise in dem Elektromotor 111 und/oder an dem Getriebe der Antriebseinheit 110 und/oder an dem Abtriebsritzel 117 und/oder an dem Verbindungselements 116 und/oder an dem Hinterrad 102 und/oder an dem Vorderrad 101 anzuordnen. Der Drehzahlsensor 107 ist mit anderen Worten dazu eingerichtet, eine Drehzahl einer Komponente des Antriebsstranges des Zweirads 100 beziehungsweise eine Geschwindigkeit des Zweirads 100 zu erfassen, insbesondere die Drehung beziehungsweise Drehzahl und/oder eine Drehrichtung des Elektromotors 111 der Antriebseinheit 110. Das Fahrzeug weist ferner wenigstens einen Geschwindigkeitssensor 114a und/oder 114b und/oder 114c auf. Der Geschwindigkeitssensor 114a, 114b und/oder 114c umfasst beispielsweise einen Reed-Sensor 114a an dem Vorderrad 101 oder dem Hinterrad 102, einen Drehzahlsensor 114c, einen sattelitenbasierten Positionssensor 114b und/oder einen Radarsensor. Der Geschwindigkeitssensor 114a, 114b, 114c ist dazu eingerichtet, die Geschwindigkeit des Zweirads 100 zu erfassen. Vorzugsweise ist der Geschwindigkeitssensor 114c an einer Radnabe des Hinterrads 102 und/oder an einer Radnabe des Vorderrades 101 angeordnet. Vorzugsweise, aber nicht notwendigerweise, ist der Geschwindigkeitssensor 114c der Drehzahlsensor 107. Ein Batteriemodul 120 ist am Zweirad 100 zur Energieversorgung der Antriebseinheit 110 angeordnet, insbesondere zur Energieversorgung des Elektromotors 111. Ferner umfasst die Antriebseinheit 110 eine inertiale Messeinheit beziehungsweise eine Sensoreinheit 112 beziehungsweise einen Sensor. Die Sensoreinheit 112 weist wenigstens einen Beschleunigungssensor auf. Vorteilhafterweise umfasst die Sensoreinheit 112 einen Beschleunigungssensor zur Erfassung einer Beschleunigung in Richtung der Längsachse 190 des Zweirads 100 und einen Beschleunigungssensor zur Erfassung einer Beschleunigung in Richtung der Querachse 191 des Zweirads 100. Am Lenker 103 des Zweirads 100 beziehungsweise des Elektrofahrrads ist ferner ein Eingabemittel beziehungsweise ein Taster 130 beziehungsweise ein Schalter zur Aktivierung und/oder Deaktivierung eines Schiebehilfe-Betriebmodus angeordnet. Der Taster 130 kann einen transparenten Teilbereich 131 und ein Leuchtmittel 132 umfassen, wobei das Leuchtmittel 132 insbesondere hinter dem transparenten Teilbereich 131 angeordnet ist und beispielsweise eine grüne Leuchtdiode aufweist. Das Zweirad 100 weist ferner eine Anzeigevorrichtung 140 mit einem Display 141 auf. Die Anzeigevorrichtung 140 ist insbesondere an dem Lenker 103 des Zweirads 100 angeordnet. Das Display 141 ist dazu eingerichtet, dem Nutzer beziehungsweise Radfahrer Informationen anzuzeigen. Alternativ oder zusätzlich zu der Anzeigevorrichtung 140 ist an dem Lenker 103 wenigstens ein Aktor 142, beispielsweise ein Vibrationsmotor beziehungsweise ein Elektromotor mit einer Unwuchtmasse, angeordnet. Der am Lenker 103 angeordnete Aktor 142 ist vorteilhafterweise dazu eingerichtet, ein haptisches Signal für den Nutzer an wenigstens einem Lenkergriff 104 des Lenkers 103 zu erzeugen. Es kann ferner vorgesehen sein an dem Lenker 103 einen Kraftsensor 160 anzuordnen. Der Kraftsensor 160 ist dazu eingerichtet, eine Kraft des Nutzers in Längsrichtung auf den Lenker 103 zu erfassen. Des Weiteren umfasst das Zweirad eine optionale Kameraeinheit 150, welche beispielsweise an dem Lenker 103 oder dem Rahmen 108 des Zweirads 100 angeordnet ist, wobei die Kameraeinheit 150 vorteilhafterweise eine Kamera 151 gerichtete Blickrichtung in Längsrichtung vorwärts aufweist. Die Kamera 151 ist dazu eingerichtet, zumindest ein Teil einer Umgebung des Zweirades 100 als Kamerabild zu erfassen.

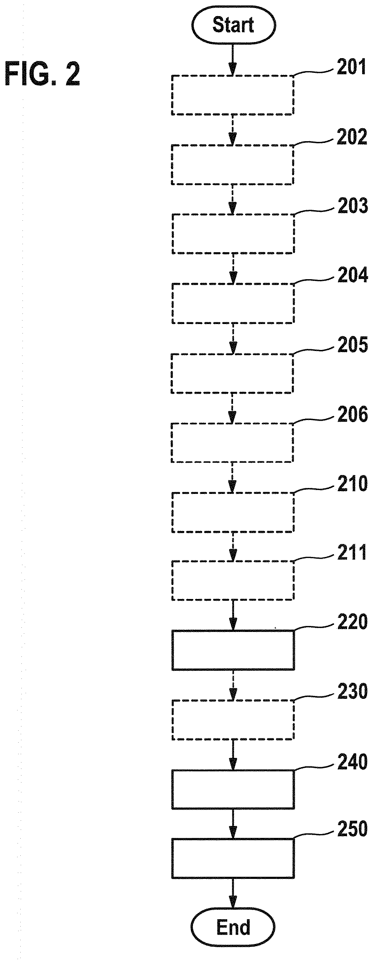

In Figur 2 ist ein Ablaufdiagramm des Verfahrens als Blockschaltbild schematisch dargestellt. In einem optionalen Schritt 201 wird eine Geschwindigkeit des Zweirads erfasst. In einem weiteren optionalen Schritt 202 kann eine Drehung des Rotors des Elektromotors des Zweirads erfasst werden, insbesondere falls die Drehung des Rotors eine in Längsrichtung rückwärtsgerichtete Bewegung des Zweirads 100 repräsentiert. Alternativ oder zusätzlich wird im optionalen Schritt 203 ein Kamerabild zumindest eines Teils einer Umgebung des Zweirades erfasst. Des Weiteren kann es optional vorgesehen sein, im Schritt 204 eine Kraft des Nutzers in Richtung der Längsachse des Zweirads 100 auf den Lenker des Zweirads zu erfassen. Ferner wird optional eine Erfassung 205 der Trittgröße des Nutzers, insbesondere der Kadenz und/oder des Fahrerdrehmoments, durchgeführt. In dem optionalen Schritt 206 erfolgt eine Erfassung der Beschleunigung des Zweirads in Richtung der Längsachse des Zweirads und/oder in Richtung der Querachse des Zweirads. Es kann in einem anschließenden optionalen Schritt 210 vorgesehen sein, einen Richtungswechsel der erfassten Beschleunigung in Richtung der Querachse innerhalb einer vorgegebenen Zeitspanne zu erkennen. Alternativ oder zusätzlich kann es im Schritt 211 optional vorgesehen sein, eine Standardabweichung in Abhängigkeit der erfassten Beschleunigung in Richtung der Längsachse des Zweirads und/oder in Richtung der Querachse des Zweirads zu ermitteln. Im Schritt 220 erfolgt eine Erkennung eines Schiebens des Zweirads durch den Nutzer mittels eines Sensors beziehungsweise der Sensoreinheit 112. Diese sensorbasierte Erkennung 220 des Schiebens erfolgt beispielsweise in Abhängigkeit der erfassten Geschwindigkeit. Die sensorbasierte Erkennung 220 des Schiebens erfolgt alternativ oder zusätzlich bevorzugt in Abhängigkeit der erfassten Geschwindigkeit, der erfassten Rotordrehung, des erfassten Kamerabildes, der erfassten Kraft des Nutzers und/oder der erfassten Trittgröße des Nutzers und/oder der erfassten Beschleunigung in Richtung der Längsachse und/oder der Querachse. Beispielsweise wird im Schritt 220 bei einer Geschwindigkeit kleiner oder gleich einem Schwellenwert 6 km/h ein Schieben erkannt oder im Falle einer zusätzlich zur Geschwindigkeit kleiner oder gleich 6 km/h erfassten Trittgröße insbesondere kein Schieben erkannt. Bevorzugt erfolgt die sensorbasierte Erkennung 220 des Schiebens alternativ oder zusätzlich in Abhängigkeit der erfassten Beschleunigung des Zweirads. Insbesondere ist es vorgesehen das Schieben im Schritt 220 zusätzlich in Abhängigkeit der ermittelten Standardabweichung für die erfasste Beschleunigung und eines Schwellenwertes zu der Standardabweichung zu erkennen, wobei das Schieben insbesondere erkannt wird, wenn die ermittelte Standardabweichung den Schwellenwert überschreitet. Es kann alternativ oder zusätzlich vorgesehen sein, die sensorbasierte Erkennung 220 des Schiebens zusätzlich in Abhängigkeit des erkannten Richtungswechsels der erfassten Beschleunigung in Richtung der Querachse durchzuführen. Besonders bevorzugt wird die sensorbasierte Erkennung des Schiebens im Schritt 220 in Abhängigkeit mehrerer erfasster Größen durchgeführt, beispielsweise in Abhängigkeit der Geschwindigkeit und der Beschleunigung. Anschließend wird im optionalen Schritt 230 eine Information zur Freigabe einer Eingabe zur Aktivierung des Schiebehilfe-Betriebsmodus in Abhängigkeit des erkannten Schiebens angezeigt. Die optionale Anzeige 230 erfolgt bevorzugt mittels einer Anzeigevorrichtung 140 beziehungsweise eines Displays 141, mittels einem haptischen Signal, welches mittels eines Aktors 142 erzeugt wird, und/oder durch eine Anpassung einer Beleuchtung einer Taste zur Erfassung einer Eingabe des Nutzers zur Aktivierung des Schiebehilfe-Betriebsmodus. Im Schritt 240 wird eine Erfassung 240 der Eingabe des Nutzers zur Aktivierung des Schiebehilfe-Betriebsmodus durchgeführt, beispielsweise mittels des Eingabemittels beziehungsweise des Tasters 130. Die Eingabe des Nutzers wird optional nur erfasst, wenn die Betätigung des Eingabemittels beziehungsweise Tasters kontinuierlich erfolgt. Diese Erfassung 240 kann vorteilhafterweise in Abhängigkeit des erkannten Schiebens durchgeführt werden. Mit anderen Worten wird die Eingabe des Nutzers im Schritt 240 vorteilhafterweise nur erfasst beziehungsweise berücksichtigt, wenn vorher im Schritt 220 ein Schieben des Zweirads erkannt wurde. Alternativ erfolgt zunächst im Schritt 240 die Erfassung 240 der Eingabe des Nutzers zur Aktivierung des Schiebehilfe-Betriebsmodus, insbesondere nur dann, wenn die Eingabe des Nutzers kontinuierlich erfasst beziehungsweise das Eingabemittel kontinuierlich betätigt wird. Anschließend erfolgt in dieser Alternative im Schritt 220 nach der erfassten Eingabe des Nutzers die Erkennung des Schiebens des Zweirads durch den Nutzer mittels eines Sensors beziehungsweise der Sensoreinheit 112 in Abhängigkeit der erfassten Eingabe des Nutzers. Mit anderen Worten wird in dieser Alternativen Ausführung die Reihenfolge vertauscht, das heisst die Eingabe des Nutzers zur Aktivierung des Schiebehilfe-Betriebsmodus ist in dieser Alternative eine Bedingung für die sensorbasierte Erkennung des Schiebens des Zweirads. Es kann vorteilhafterweise vorgesehen sein, dass dem Nutzer nach der erfassten Eingabe eine Information angezeigt wird, wobei die Information einen Hinweis für den Nutzer umfasst, dass der Nutzer durch Schieben des Zweirads die Schiebehilfe aktiviert, wodurch ein Motordrehmoment erzeugt wird. Im Schritt 250 wird ein Motordrehmoment zum Antrieb des Zweirads in Abhängigkeit einer erfassten Eingabe eines Nutzers und in Abhängigkeit des erkannten Schiebens erzeugt. Somit wird durch den Schritt 250 die Schiebehilfe aktiviert beziehungsweise eine motorische Kraft beziehungsweise das Motordrehmoment zur Unterstützung des Nutzers beziehungsweise Radfahrers beim Schieben des Zweirads erzeugt. Es kann vorgesehen sein, dass das Motordrehmoment zusätzlich in Abhängigkeit der Erkennung 220 des Schiebens des Zweirads erfolgt. Es ist insbesondere vorgesehen, dass der Schritt 250 abgebrochen wird, sobald kein Schieben des Zweirads mehr erkannt wird. Mit anderen Worten kann ist es insbesondere vorgesehen sein, dass das Verfahren wiederholt beziehungsweise kontinuierlich durchgeführt wird.

## Patentansprüche

1. Verfahren zur Steuerung eines Elektromotors (111) als Antriebsmotor eines Zweirads (100), aufweisend die folgenden Verfahrensschritte
• sensorbasierte Erkennung (220) eines Schiebens des Zweirads (100),
• Erfassung (240) einer Eingabe eines Nutzers zur Aktivierung eines Schiebehilfe-Betriebsmodus, wobei die Erfassung (240) der Eingabe des Nutzers nach der sensorbasierten Erkennung (220) erfolgt, und
• Erzeugung (250) eines Motordrehmoments zum Antrieb des Zweirads (100) im Schiebehilfe-Betriebsmodus in Abhängigkeit des erkannten Schiebens und der erfassten Eingabe des Nutzers.

2. Verfahren nach Anspruch 1, wobei vor der Erzeugung (250) des Motordrehmoments folgender Schritt durchgeführt wird
• Anzeige (230) einer Information zur Freigabe der Erfassung (240) einer Eingabe in Abhängigkeit des erkannten Schiebens zur Aktivierung des Schiebehilfe-Betriebsmodus.

3. Verfahren nach Anspruch 1, wobei vor der Erzeugung (250) des Motordrehmoments folgender Schritt durchgeführt wird
• Anzeige (230) einer Information zur Freigabe der sensorbasierten Erkennung (220) des Schiebens in Abhängigkeit der erfassten Eingabe des Nutzers zur Aktivierung des Schiebehilfe-Betriebsmodus.

4. Verfahren nach einem der vorhergehenden Ansprüche, wobei vor der Erfassung (240) der Eingabe des Nutzers folgende Schritte durchgeführt werden
• Erfassung (201) einer Geschwindigkeit des Zweirads (100), und
• Erkennung (220) des Schiebens in Abhängigkeit der erfassten Geschwindigkeit.

5. Verfahren nach einem der vorhergehenden Ansprüche, wobei vor der Erfassung (240) der Eingabe des Nutzers folgende Schritte durchgeführt werden
• Erfassung (206) einer Beschleunigung des Zweirads (100) in Richtung einer Längsachse (190) des Zweirads (100) und/oder in Richtung einer Querachse des Zweirads (100), und
• Erkennung (220) des Schiebens in Abhängigkeit der erfassten Beschleunigung des Zweirads (100).

6. Verfahren nach Anspruch 5, wobei folgender Schritt durchgeführt wird
• Ermittlung (211) einer statistischen Größe, insbesondere einer Standardabweichung, in Abhängigkeit der erfassten Beschleunigung in Richtung der Längsachse (190) des Zweirads (100) und/oder in Richtung der Querachse (191) des Zweirads (100), und
• Erkennung (220) des Schiebens zusätzlich in Abhängigkeit der ermittelten statistischen Größe und eines Schwellenwertes, wobei das Schieben insbesondere erkannt wird, wenn die ermittelte statistische Größe den Schwellenwert überschreitet.

7. Verfahren nach einem der Ansprüche 5 oder 6, wobei folgender Schritt durchgeführt wird
• Erkennung (210) eines Richtungswechsels der erfassten Beschleunigung in Richtung der Querachse (191) innerhalb einer vorgegebenen Zeitspanne, und
• Erkennung (220) des Schiebens zusätzlich in Abhängigkeit des erkannten Richtungswechsels der erfassten Beschleunigung in Richtung der Querachse (191).

8. Verfahren nach einem der vorhergehenden Ansprüche, wobei folgende Schritte durchgeführt werden
• Erfassung (202) einer Drehung des Rotors des Elektromotors (111), und
• Erkennung (220) des Schiebens in Abhängigkeit der erfassten Rotordrehung.

9. Verfahren nach einem der vorhergehenden Ansprüche, wobei folgende Schritte durchgeführt werden
• Erfassung (203) eines Kamerabildes zumindest eines Teils einer Umgebung des Zweirades (100), und
• Erkennung (220) des Schiebens in Abhängigkeit des erfassten Kamerabildes.

10. Verfahren nach einem der vorhergehenden Ansprüche, wobei folgende Schritte durchgeführt werden
• Erfassung (204) einer Kraft des Nutzers in Richtung der Längsachse des Zweirads auf einen Lenker des Zweirads, und
• Erkennung (220) des Schiebens in Abhängigkeit der erfassten Kraft des Nutzers.

11. Verfahren nach einem der vorhergehenden Ansprüche, wobei folgende Schritte durchgeführt werden
• Erfassung (205) einer Trittgröße des Nutzers, insbesondere einer Kadenz und/oder eines Fahrerdrehmoments, und
• Erkennung (220) des Schiebens in Abhängigkeit der erfassten Trittgröße des Nutzers, wobei im Falle einer erfassten Trittgröße insbesondere kein Schieben erkannt wird.

12. Verfahren nach einem der vorhergehenden Ansprüche, wobei die Anzeige (230) der Information durch eine Anpassung einer Beleuchtung einer Taste zur Eingabe des Nutzers zur Aktivierung des Schiebehilfe-Betriebsmodus erfolgt.

13. Steuergerät (180), wobei das Steuergerät (180) so konfiguriert ist, dass es ein Verfahren nach einem der Ansprüche 1 bis 12 durchführt.

14. Zweirad (100), insbesondere Elektrofahrrad, mit einem Steuergerät (180) nach Anspruch 13.

## Claims

1. Method for controlling an electric motor (111) as a drive motor of a two-wheeled vehicle (100), comprising the following method steps
• sensor-based identification (220) of the two-wheeled vehicle (100) being pushed,
• detection (240) of an input by a user for activating a pushing aid operating mode, wherein the detection (240) of the input by the user is made after the sensor-based identification (220), and
• generation (250) of a motor torque for driving the two-wheeled vehicle (100) in the pushing aid operating mode depending on identified pushing and the detected input by the user.

2. Method according to Claim 1, wherein the following step is carried out before the generation (250) of the motor torque
• display (230) of information for enabling the detection (240) of an input depending on the identified pushing for activating the pushing aid operating mode.

3. Method according to Claim 1, wherein the following step is carried out before the generation (250) of the motor torque
• display (230) of information for enabling the sensor-based identification (220) of pushing depending on the detected input by the user for activating the pushing aid operating mode.

4. Method according to any of the preceding claims, wherein the following steps are carried out before the detection (240) of the input by the user
• detection (201) of a speed of the two-wheeled vehicle (100), and
• identification (220) of pushing depending on the detected speed.

5. Method according to any of the preceding claims, wherein the following steps are carried out before the detection (240) of the input by the user
• detection (206) of an acceleration of the two-wheeled vehicle (100) in the direction of a longitudinal axis (190) of the two-wheeled vehicle (100) and/or in the direction of a transverse axis of the two-wheeled vehicle (100), and
• identification (220) of pushing depending on the detected acceleration of the two-wheeled vehicle (100).

6. Method according to Claim 5, wherein the following step is carried out
• determination (211) of a statistical quantity, in particular a standard deviation, depending on the detected acceleration in the direction of the longitudinal axis (190) of the two-wheeled vehicle (100) and/or in the direction of the transverse axis (191) of the two-wheeled vehicle (100), and
• identification (220) of pushing additionally depending on the determined statistical quantity and a threshold value, wherein pushing is identified in particular when the determined statistical quantity exceeds the threshold value.

7. Method according to either of Claims 5 and 6, wherein the following step is carried out
• identification (210) of a change in direction of the detected acceleration in the direction of the transverse axis (191) within a specified time period, and
• identification (220) of pushing additionally depending on the identified change in direction of the detected acceleration in the direction of the transverse axis (191).

8. Method according to any of the preceding claims, wherein the following steps are carried out
• detection (202) of rotation of the rotor of the electric motor (111), and
• identification (220) of pushing depending on the detected rotation of the rotor.

9. Method according to any of the preceding claims, wherein the following steps are carried out
• capture (203) of a camera image of at least part of an area surrounding the two-wheeled vehicle (100), and
• identification (220) of pushing depending on the captured camera image.

10. Method according to any of the preceding claims, wherein the following steps are carried out
• detection (204) of a force applied by the user in the direction of the longitudinal axis of the two-wheeled vehicle on a handlebar of the two-wheeled vehicle, and
• identification (220) of pushing depending on the detected force applied by the user.

11. Method according to any of the preceding claims, wherein the following steps are carried out
• detection (205) of a pedalling variable of the user, in particular a cadence and/or a rider torque, and
• identification (220) of pushing depending on the detected pedalling variable of the user, wherein in particular pushing is not identified if a pedalling variable is detected.

12. Method according to any of the preceding claims, wherein the display (230) of the information is carried out by adjusting illumination of a button for input by the user for activating the pushing aid operating mode.

13. Control device (180), wherein the control device (180) is configured such that it carries out a method according to any of Claims 1 to 12.

14. Two-wheeled vehicle (100), in particular electric bicycle, having a control device (180) according to Claim 13.

## Revendications

1. Procédé permettant de commander un moteur électrique (111) en tant que moteur d'entraînement d'un deux-roues (100), présentant les étapes de procédé suivantes
• reconnaissance à base de capteur (220) d'un déplacement poussé du deux-roues (100),
• détection (240) d'une entrée d'un utilisateur pour activer un mode de fonctionnement d'aide à la poussée, la détection (240) de l'entrée de l'utilisateur étant effectuée après la reconnaissance à base de capteur (220), et
• génération (250) d'un couple moteur pour entraîner le deux-roues (100) dans le mode de fonctionnement d'aide à la poussée en fonction du déplacement poussé reconnu et de l'entrée détectée de l'utilisateur.

2. Procédé selon la revendication 1, dans lequel, avant la génération (250) du couple moteur, l'étape suivante est exécutée
• affichage (230) d'une information pour valider la détection (240) d'une entrée en fonction du déplacement poussé reconnu pour activer le mode de fonctionnement d'aide à la poussée.

3. Procédé selon la revendication 1, dans lequel, avant la génération (250) du couple moteur, l'étape suivante est exécutée
• affichage (230) d'une information pour valider la reconnaissance à base de capteur (220) du déplacement poussé en fonction de l'entrée détectée de l'utilisateur pour activer le mode de fonctionnement d'aide à la poussée.

4. Procédé selon l'une quelconque des revendications précédentes, dans lequel, avant la détection (240) de l'entrée de l'utilisateur, les étapes suivantes sont exécutées
• détection (201) d'une vitesse du deux-roues (100), et
• reconnaissance (220) du déplacement poussé en fonction de la vitesse détectée.

5. Procédé selon l'une quelconque des revendications précédentes, dans lequel, avant la détection (240) de l'entrée de l'utilisateur, les étapes suivantes sont exécutées
• détection (206) d'une accélération du deux-roues (100) en direction d'un axe longitudinal (190) du deux-roues (100) et/ou en direction d'un axe transversal du deux-roues (100), et
• reconnaissance (220) du déplacement poussé en fonction de l'accélération détectée du deux-roues (100).

6. Procédé selon la revendication 5, dans lequel l'étape suivante est exécutée
• détermination (211) d'une grandeur statistique, en particulier d'un écart-type, en fonction de l'accélération détectée en direction de l'axe longitudinal (190) du deux-roues (100) et/ou en direction de l'axe transversal (191) du deux-roues (100), et
• reconnaissance (220) du déplacement poussé en plus en fonction de la grandeur statistique déterminée et d'une valeur seuil, dans lequel le déplacement poussé est reconnu en particulier lorsque la grandeur statistique déterminée dépasse la valeur seuil.

7. Procédé selon l'une quelconque des revendications 5 ou 6, dans lequel l'étape suivante est exécutée
• reconnaissance (210) d'un changement de direction de l'accélération détectée en direction de l'axe transversal (191) dans une période de temps prédéfinie, et
• reconnaissance (220) du déplacement poussé en fonction du changement de direction reconnu de l'accélération détectée en direction de l'axe transversal (191).

8. Procédé selon l'une quelconque des revendications précédentes, **caractérisé en ce que** les étapes suivantes sont exécutées
• détection (202) d'une rotation du rotor du moteur électrique (111), et
• reconnaissance (220) du déplacement poussé en fonction de la rotation de rotor détectée.

9. Procédé selon l'une quelconque des revendications précédentes, **caractérisé en ce que** les étapes suivantes sont exécutées
• détection (203) d'une image de caméra d'au moins une partie d'un environnement du deux-roues (100), et
• reconnaissance (220) du déplacement poussé en fonction de l'image de caméra détectée.

10. Procédé selon l'une quelconque des revendications précédentes, **caractérisé en ce que** les étapes suivantes sont exécutées
• détection (204) d'une force de l'utilisateur en direction de l'axe longitudinal du deux-roues sur un guidon du deux-roues, et
• reconnaissance (220) du déplacement poussé en fonction de la force de l'utilisateur détectée.

11. Procédé selon l'une quelconque des revendications précédentes, **caractérisé en ce que** les étapes suivantes sont exécutées
• détection (205) d'une grandeur de coup de pédale de l'utilisateur, en particulier d'une cadence et/ou d'un couple conducteur, et
• reconnaissance (220) du déplacement poussé en fonction de la grandeur de coup de pédale de l'utilisateur, dans lequel dans le cas d'une grandeur de coup de pédale détectée, en particulier aucun déplacement poussé n'est reconnu.

12. Procédé selon l'une quelconque des revendications précédentes, dans lequel l'affichage (230) de l'information est effectué par une adaptation d'un éclairage d'une touche pour l'entrée de l'utilisateur en vue de l'activation du mode de fonctionnement d'aide à la poussée.

13. Dispositif de commande (180), dans lequel le dispositif de commande (180) est configuré de telle sorte qu'un procédé selon l'une quelconque des revendications 1 à 12 est exécuté.

14. Deux-roues (100), en particulier vélo électrique, comprenant un dispositif de commande (180) selon la revendication 13.
